**Europäisches Patentamt**

**European Patent Office**

**Office européen des brevets**

(19)

(11) Veröffentlichungsnummer : **0 361 041 B1**

(12) # EUROPÄISCHE PATENTSCHRIFT

(45) Veröffentlichungstag der Patentschrift :
**24.06.92 Patentblatt 92/26**

(21) Anmeldenummer : **89114696.1**

(22) Anmeldetag : **09.08.89**

(51) Int. Cl.⁵ : **B60G 11/27, B62D 61/12**

(54) Luftfederachse.

(30) Priorität : **28.09.88 DE 3832882**

(43) Veröffentlichungstag der Anmeldung :
**04.04.90 Patentblatt 90/14**

(45) Bekanntmachung des Hinweises auf die
Patenterteilung :
**24.06.92 Patentblatt 92/26**

(84) Benannte Vertragsstaaten :
**BE DE FR GB IT NL**

(56) Entgegenhaltungen :
**DE-B- 1 016 134**
**DE-U- 8 413 888**
**FR-A- 1 164 989**

(73) Patentinhaber : **Bergische Achsenfabrik Fr.**
**Kotz & Söhne**
**Am Ohlerhammer**
**W-5276 Wiehl 1 (DE)**

(72) Erfinder : **Adolfs, M., Dipl.Ing.**
**In der Bockemühle 47**
**W-5275 Bergneustadt 2 (DE)**
Erfinder : **Steiner, H.**
**Freiherr-von-Stein-Strasse 1**
**W-5276 Wiehl (DE)**

(74) Vertreter : **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11 (DE)**

## Beschreibung

Die Erfindung betrifft eine Luftfederachse mit großem Achshub, insbesondere für bahntransportierbare Fahrzeuge, mit einem über zwei Lenkerfedern an Lenkerlagern eines Fahrzeugrahmens gelagerten Achskörper und mit an dem Fahrzeugrahmen und über Luftfederbalgträger an dem Achskörper abgestützten Luftfederbälgen, die mit einem Schwenklager am Achskörper gelagert sind, wobei jeder Luftfederbalgträger beiderseits des Schwenklagers einen Hebelarm hat, an dem ein in Richtung des Achshubes angeordneter Luftfederbalg abgestützt ist.

Luftfederachsen mit großem Achshub werden insbesondere benötigt, wenn Fahrzeuge sowohl im Straßenverkehr gefahren, als auch auf Eisenbahnanhängern transportiert werden sollen. Praktisch werden solche Luftfederachsen deshalb besonders für Sattelauflieger von Sattelschleppern benötigt. Auch wenn für den Eisenbahntransport sogenannte Eisenbahn-Dollies verwendet werden, d.h. niedrige Transportanhänger, ist ein Achshub von ca. 400 mm erforderlich, insbesondere wenn Tunnel durchfahren werden müssen.

Aus der DE-B- 10 16 134 ist eine Anordnung der Federung bei Kraftfahrzeugen mit einzeln an Längslenkern aufgehängten Rädern bekannt, bei welcher mit einem Schwenklager am Achskörper zwei Luftfederbalgträger angeordnet sind, auf denen sich die Luftfederbälge abstützen. Diese bekannte Federung hat den Nachteil, daß die zweiarmigen Luftfederbalgträger pendelnd gelagert sind und deshalb im dynamischen Fahrbetrieb keine stabile Betriebslage haben. Dadurch kann es insbesondere beim Bremsen zu gefährlichen Fahrsituationen kommen.

Davon ausgehend liegt der Erfindung die **Aufgabe** zugrunde, eine verbesserte Luftfederachse zu schaffen, mit der große Achshübe mit relativ kurzen Luftfederbälgen verwirklicht und eine definierte Lage des Luftfederbalgträgers in allen praktischen Betriebszuständen sichergestellt werden können.

Zur technischen **Lösung** dieser Aufgabe wird vorgeschlagen, daß jeder Luftfederbalgträger bei Druckluftbeaufschlagung mit mindestens einem Hebelarm an einem achskörperfesten Anschlag anliegt, der ein Schwenken des dem Lenkerlager zugewandten Hebelarmes vom Fahrzeugrahmen weg verhindert und daß die Luftfederbälge bei Druckluftbeaufschlagung auf diesen Hebelarm ein geringfügig größeres Drehmoment als auf den vom Lenkerlager abgewandten Hebelarm ausüben.

Eine erfindungsgemäß ausgebildete Luftfederachse ist also mit insgesamt vier Luftfederbälgen am Fahrzeugrahmen abgestützt. Bei Druckluftbeaufschlagung der Luftfederbälge sind die Luftfederbalgträger aufgrund der einander entgegengerichteten Drehmomente an den Hebelarmen an einem Schwenken um die Schwenklagerachse gehindert. Im dynamischen Fahrbetrieb kann sich das aber ändern, wenn die Drehmomente gleich groß sind. Mit dem achskörperfesten Anschlag und den geringfügig unterschiedlichen Drehmomenten wird der **Vorteil** erzielt, daß die beiden Luftfederbalgträger in allen Betriebszuständen eine definierte Betriebslage behalten.

Durch Bemessung der Hebelarme des Luftfederbalgträgers bzw. des Durchmessers der Luftfederbälge kann sichergestellt werden, daß bei Druckluftbeaufschlagung zwei gleich große, einander entgegengerichtete Drehmomente um das Schwenklager auftreten.

Um die Luftfederbälge vor einer Zerstörung zu schützen und Stöße abzufangen, können die Luftfederbälge Anschläge mit Gummipuffern zur Begrenzung des Maximalhubes aufweisen.

Bei einer bevorzugten Ausgestaltung hat jeder Luftfederbalgträger zwischen den Hebelarmen eine Kröpfung mit einer Innenzylinderfläche und hat jeder Achskörper für jeden Luftfederbalgträger eine Außenzylinderfläche, die gemeinsam mit der Innenzylinderfläche das Schwenklager bildet. Ein in der vorstehenden Weise ausgebildetes Schwenklager ist in der Herstellung besonders einfach und kann auch leicht montiert bzw. demontiert werden. Wenn die Kröpfung des Luftfederbalgträgers außen eine zylindrische Führungsfläche hat und eine Rolle auf der Führungsfläche abrollbar an dem Achskörper gelagert ist, ist der Luftfederbalgträger vor einem Abheben von dem Achskörper bei dessen Absenken gesichert.

Ein zwischen die Innenzylinderfläche des Luftfederbalgträgers und die Außenzylinderfläche des Achskörpers eingesetztes Verschleißblech ermöglicht praktisch eine Verschleißfreiheit der Innenzylinderfläche des Luftfederbalgträgers und der Außenzylinderfläche des Achskörpers und kann bei übermäßigem Spiel des Schwenklagers einfach ausgetauscht werden.

Bei einer Weiterbildung der Erfindung sind zum Verbinden von Lenkerfedern und Achskörper Achslappen und Federbügel vorgesehen, wobei die Lenkerfedern mit den Federbügeln zwischen den Achslappen und der Achskörper zwischen den Federbügeln und einem der Achslappen verspannt sind und bilden die den Achskörper umgreifenden Federbügel seitliche Führungen für die Kröpfung des Luftfederbalgträgers. Die Federbügel üben somit eine Doppelfunktion als Bestandteil der Verbindung von Lenkerfedern und Achskörper und als Bestandteil des Schwenklagers zwischen Achskörper und Luftfederbalgträger aus.

Wenn die Luftfederachse für den Bahntransport auf einen Eisenbahnanhänger gefahren wird, kann die Achse durch Entlüften der Federbälge unter dem Eigengewicht des Fahrzeuges angehoben, d.h. zum Fahrzeugrahmen hinbewegt werden. Wenn jedoch zur weiteren Verminderung der Gesamthöhe des beladenen Eisenbahnanhängers der Fahrzeugrahmen auf dem Eisenbahnanhänger abgestützt werden soll, so daß das Fahrzeuggewicht die Luftfederachse nicht mehr anzuheben vermag, kann eine Achsanhebevorrichtung zum Anheben des Achskörpers vorgesehen sein. Eine geeignete Achsanhebevorrichtung ist beispielsweise aus der DE-OS 33 09 729 bekannt oder in der Patentanmeldung P 38 07 273.4 beschrieben.

Weitere Einzelheiten und Vorteile des Gegenstandes der Erfindung ergeben sich aus der nachfolgenden Beschreibung der zugehörigen Zeichnungen, die eine bevorzugte Ausführungsform einer erfindungsgemäßen Luftfederachse zeigen. In den Zeichnungen zeigen:

Fig. 1 eine Luftfederachse mit achskörperfestem Anschlag und gekröpftem Luftfederbalgträger bei Druckluftbeaufschlagung der Luftfederbälge im Längsschnitt;

Fig. 2 dieselbe Luftfederachse in teilweiser Rückansicht;

Fig. 3 dieselbe Luftfederachse in teilweiser Draufsicht;

Fig. 4 dieselbe Luftfederachse mit entlüfteten Luftfederbälgen in Seitenansicht.

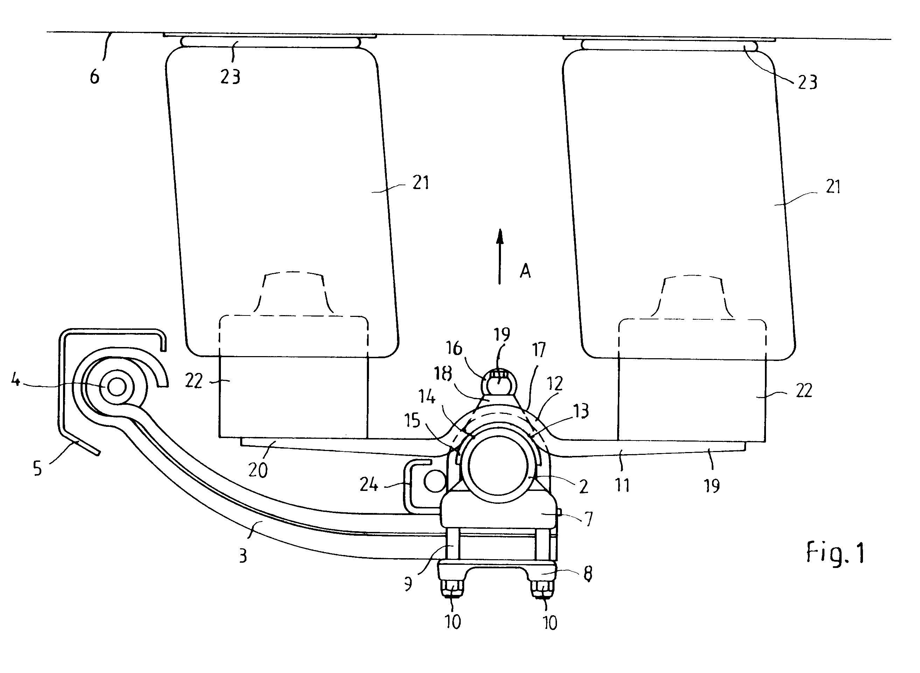

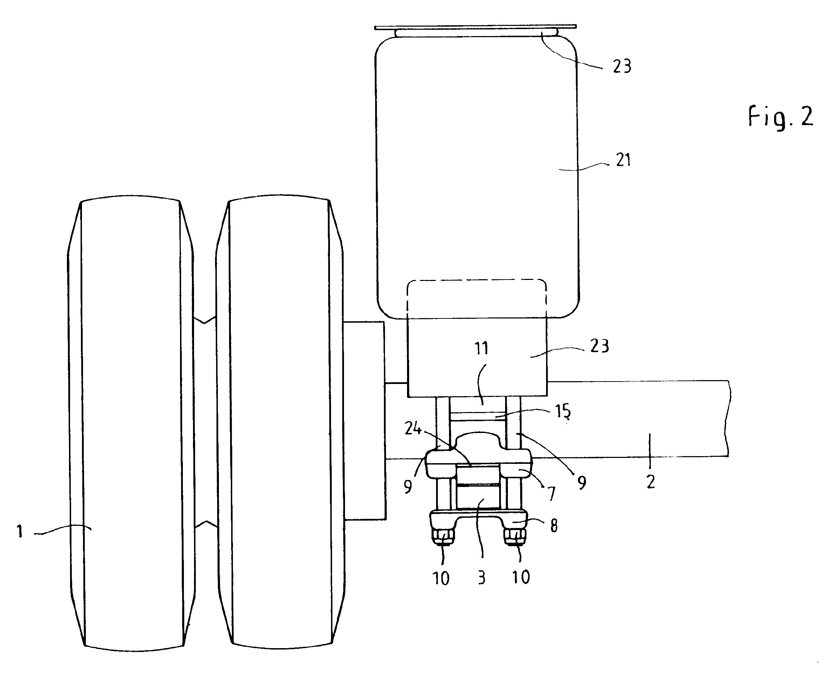

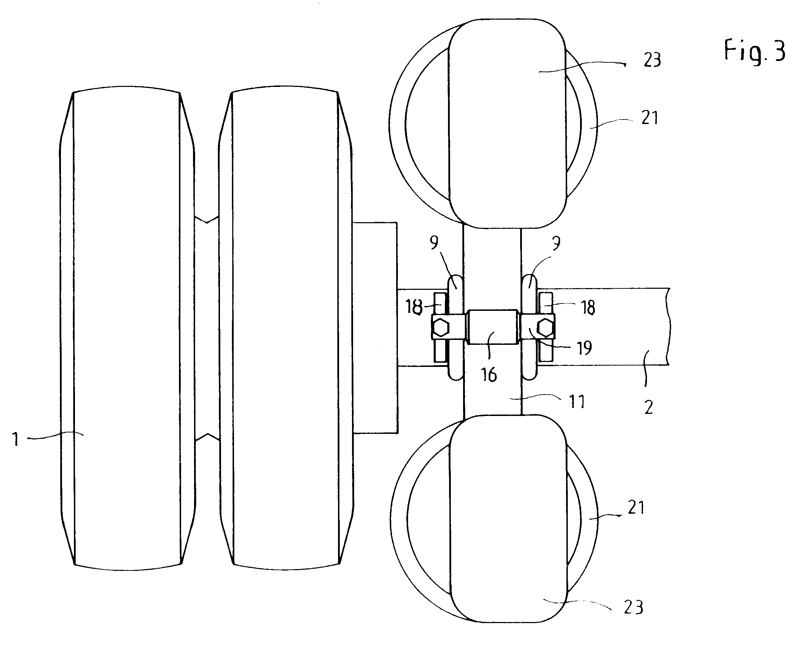

In den Längsschnitten gemäß Fig. 1 und 2 wurde die Luftfederachse zur Verbesserung der Übersichtlichkeit ohne eine Bereifung 1 gemäß Fig. 2 und 3 dargestellt.

Wie aus der Fig. 1 ersichtlich ist, hat die Luftfederachse einen Achskörper 2, der mit einer Lenkerfeder 3 verbunden ist, wobei die Lenkerfeder 3 mit einem Lenkerlager 4 an einem Träger 5 gelagert ist. Der Träger 5 verläuft quer zur Fahrtrichtung unterhalb eines Fahrzeugrahmens 6 und ist fest mit diesem verbunden. Im Träger 5 sind zwei Lenkerlager 4 für zwei Lenkerfedern 3 ausgebildet, die den Achskörper 2 beidseitig zwischen den Bereifungen 1 halten.

Zum Verbinden von Achskörper 2 und Lenkerfedern 3 sind an jeder Verbindungsstelle ein oberer Achslappen 7 und ein unterer Achslappen 8 sowie zwei Federbügel 9 und vier Spannschrauben 10 vorgesehen. Der Achskörper 2 ist zwischen den Federbügeln 9 und dem oberen Achslappen 7 verspannt. Die Lenkerfeder 3 hingegen ist zwischen dem oberen Achslappen 7 und dem unteren Achslappen 8 eingeklemmt. Die Verbindung wird durch Anziehen der Spannschrauben 10 hergestellt. Wie besser aus der Fig. 2 ersichtlich ist, wird die Lenkerfeder 3 durch die beidseitig angeordneten Federbügel 9 gleichmäßig eingeklemmt. Zugleich wird der Achskörper 2 durch die beiden Federbügel 9 jeder Verbindung senkrecht zur Lenkerfeder 3 ausgerichtet.

Wie aus der Fig. 1 ersichtlich ist, ist auf dem Achskörper 2 ein Luftfederbalgträger 11 abgestützt. Der Luftfederbalgträger 11 hat etwa mittig eine Kröpfung 12 mit einer Innenzylinderfläche 13. Gemeinsam mit einer Außenzylinderfläche 14 des Achskörpers 2 und einem zwischenliegenden Verschleißblech 15 bildet die Innenzylinderfläche 13 des Luftfederbalgträgers 11 ein Schwenklager.

Das Schwenklager wird von einer Rolle 16 gesichert, die an einer zylindrischen Führungsfläche 17 der Außenseite der Kröpfung 12 abrollt. Die aus den Fig. 1 und 3 ersichtlich ist, sind beidseitig der Kröpfung 12 Halter 18 an dem Achskörper 2 befestigt, welche die Rolle 16 auf einem festgeschraubten Lagerbolzen 19 tragen. Die Bügel der Federbügel 9 führen die Kröpfung 12 des Luftfederbalgträgers 11 außerdem seitlich.

Wie besser der Fig. 1 entnommen werden kann, hat der Luftfederbalgträger 11 zwei Hebelarme 19,20, an denen zwei identische Luftfederbälge 21 mit Bodenplatten 22 abgestützt sind, die mit Kopfplatten 23 gegen den Fahrzeugrahmen 6 drücken. Der dem Lenkerlager 4 zugewandte Hebelarm 20 ist etwas größer als der dem Lenkerlager 4 abgewandte Hebelarm 19, so daß der an dem Hebelarm 20 abgestützte Luftfederbalg 21 bei identischer Druckluftbeaufschlagung ein etwas größeres Drehmoment auf den Luftfederbalgträger ausübt, als der an dem vom Lenkerlager abgewandten Hebelarm 19 abgestützte Luftfederbalg 21.

Bei Druckluftbeaufschlagung wird der Luftfederbalgträger 11 mit der Unterseite seines Hebelarmes 20 gegen einen fest mit dem Achskörper 2 verbundenen Anschlag 24 mit U-Profil gedrückt. Ein verlängerter Schenkel des Anschlages 24 ist zwischen dem oberen Achslappen 7 und der Lenkerfeder 3 eingeklemmt, wie auch der Fig. 2 entnommen werden kann. Durch den Anschlag 24 wird der Luftfederbalgträger 11 bei Druckluftbeaufschlagung der Luftfederbälge 21 in eine definierte Ausgangslage gebracht, in der die Luftfederbälge 21 etwa in Richtung des Achshubes A ausgerichtet sind. Durch die etwa gleiche Länge der Hebelarme 19,20 ist sichergestellt, daß der Luftfederbalgträger 11 auch beim Einfedern der Luftfederachse eine parallele Stellung zu der in der Fig. 1 dargestellten Ausgangslage beibehält und die Luftfederbälge 21 etwa in Richtung des Achshubes angeordnet bleiben.

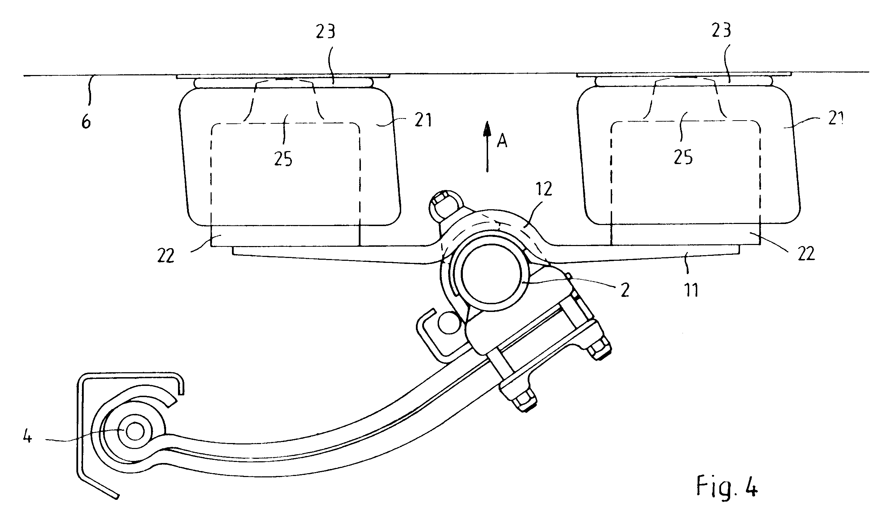

Wie in der Fig. 4 dargestellt ist, werden die Luftfederbälge 21 durch Entlüften und das Gewicht des Fahrzeugrahmens 6 oder durch eine - nicht dargestellte - Achsanhebevorrichtung zusammengedrückt. Hierbei liegen die Bodenplatten 22 mit Anschläge bildenden Gummipuffern 25 an den rahmenseitigen Kopfplatten 23 an. Hierbei ist ein Achshub von ca. 400 mm gegeben.

Der Achskörper 2 wird bei dem Achshub in Richtung A um das Lenkerlager 4 geschwenkt, so daß er auch in der Kröpfung 12 des Luftfederbalgträgers 11 geschwenkt wird.

Durch das ausschließlich parallele Zusammendrücken der Luftfederbälge 21 zur Richtung des Achshubes A um einen Weg von der Größe des Achshubes und durch die geringe Verformung der Luftfederbälge 21 senkrecht zur Richtung des Achshubes A können relativ kurze Großserienbälge verwendet werden.

Bezugszeichenliste :

1	Bereifung
2	Achskörper
3	Lenkerfeder
4	Lenkerlager
5	Träger
6	Fahrzeugrahmen
7	Achslappen (oberer)
8	Achslappen (unterer)
9	Federbügel
10	Spannschraube
11	Luftfederbalgträger
12	Kröpfung
13	Innenzylinderfläche
14	Außenzylinderfläche
15	Verschleißblech
16	Rolle
17	Führungsfläche
18	Halter
19	Hebelarm
20	Hebelarm
21	Luftfederbalg
22	Bodenplatte
23	Kopfplatte
24	Anschlag
25	Gummipuffer
A Achshub

**Patentansprüche**

1. Luftfederachse mit großem Achshub, insbesondere für bahntransportierbare Fahrzeuge, mit einem über zwei Lenkerfedern (3) an Lenkerlagern (4) eines Fahrzeugrahmens (6) gelagerten Achskörper (2) und mit an dem Fahrzeugrahmen (6) und über Luftfederbalgträger (11) an dem Achskörper (2) abgestützten Luftfederbälgen (21), die mit einem Schwenklager am Achskörper (2) gelagert sind, wobei jeder Luftfederbalgträger (11) beiderseits des Schwenklagers einen Hebelarm (19,20) hat, an dem ein in Richtung des Achshubes (A) angeordneter Luftfederbalg (21) abgestützt ist,
**dadurch gekennzeichnet,**
daß jeder Luftfederbalgträger (11) bei Druckluftbeaufschlagung mit mindestens einem Hebelarm (20) an einem achskörperfesten Anschlag (24) anliegt, der ein Schwenken des dem Lenkerlager (4) zugewandten Hebelarmes (20) vom Fahrzeugrahmen weg verhindert und daß die Luftfederbälge (21) bei Druckluftbeaufschlagung auf den vorgenannten Hebelarm (20) ein geringfügig größeres Drehmoment als auf den vom Lenkerlager (4) abgewandten Hebelarm (19) ausüben.

2. Luftfederachse nach Anspruch 1, dadurch gekennzeichnet, daß der dem Lenkerlager (4) zugewandte Hebelarm (20) geringfugig größer als der vom Lenkerlager (4) abgewandte Hebelarm (19) ist.

3. Luftfederachse nach einem der Ansprüche 1 und 2, dadurch gekennzeichnet, daß die Luftfederbälge (21) Anschläge mit Gummipuffern (25) zur Begrenzung des Maximalhubes aufweisen.

4. Luftfederachse nach einem der Ansprüche 1 bis 3, dadurch gekennzeichnet, daß jeder Luftfederbalgträger (11) zwischen den Hebelarmen (19,20) eine Kröpfung (12) mit einer Innenzylinderfläche (13) hat und daß jeder Achskörper (2) für jeden Luftfederbalgträger (11) eine Außenzylinderfläche (14) hat, die gemeinsam mit der Innenzylinderfläche (13) das Schwenklager bildet.

5. Luftfederachse nach Anspruch 4, dadurch gekennzeichnet, daß die Kröpfung (12) jedes Luftfederbalgträgers (11) außen eine zylindrische Führungsfläche (17) hat und daß eine Rolle (16) auf der Führungsfläche (17) abrollbar an dem Achskörper (2) gelagert ist.

6. Luftfederachse nach einem der Ansprüche 4 und 5, dadurch gekennzeichnet, daß zwischen Innenzylinderfläche (13) des Luftfederbalgträgers (11) und der Außenzylinderfläche (14) des Achskörpers (2) ein Verschleißblech (15) eingesetzt ist.

7. Luftfederachse nach einem der Ansprüche 4 bis 6, dadurch gekennzeichnet, daß zum Verbinden von Lenkerfedern (3) und Achskörper (2) Achslappen (7,8) und Federbügel (9) vorgesehen sind, wobei die Lenkerfedern (3) mit den Federbügeln (9) zwischen den Achslappen (7,8) und der Achskörper (2) zwischen den Federbügeln (9) und einem der Achslappen (7) verspannt sind und daß die den Achskörper (2) umgreifenden Federbügel (9) seitliche Führungen für die Kröpfung (12) des Luftfederbalgträgers (11) bilden.

8. Luftfederachse nach einem der Ansprüche 1 bis 7, dadurch gekennzeichnet, daß eine Achsanhebevorrichtung zum Anheben des Achskörpers (2) vorgesehen ist.

## Claims

1. A high-lift air-sprung axle, more particularly for rail-transportable vehicles, having: an axle beam (2) mounted by way of two locating springs (3) on link bearings (4) of a vehicle chassis (6); and air spring bellows (21) which bear on the chassis (6) and by way of supports (11) on the axle beam (2) and which are mounted thereon by way of a pivot bearing, each air spring bellows support (11) having on either side of the pivot bearing a lever arm (19, 20) on which an air spring bellows (21) arranged in the direction of the axle lift (A) is disposed bears,

characterised in that
when the bellows are charged with compressed air each air spring bellows support (11) engages by way of at least one lever one (20) with an abutment (24) which is rigidly secured to the axle beam and which prevents the lever arm (20) near the locating spring bearing (4) from pivoting away from the chassis (6), and when charged with compressed air the air spring bellows (21) exert on the last-mentioned lever arm (20) a slightly greater torque than that exerted by the lever arm (19) remote from the locating spring bearing (4).

2. An axle according to claim 1, characterised in that the lever arm (20) near the bearing (4) is slightly longer than the lever arm (19) remote therefrom.

3. An axle according to claim 1 and/or claim 2, characterised in that the air spring bellows (21) have abutments with rubber buffers (25) to limit the maximum lift.

4. An axle according to any of claims 1 to 3, characterised in that each air spring bellows support (11) has between the lever arms (19, 20) a cranked part (12) having an internal cylindrical surface (13), and each axle beam (2) has for each air spring bellows support (11) an externally cylindrical surface (14) which co-operates with the inner cylindrical surface (13) to form the pivot bearing.

5. An axle according to claim 4, characterised in that the cranked part (12) of each air spring bellows support (11) has an external cylindrical guide surface (17) and a roller (16) is so mounted as to be rollable on the guide surface (17).

6. An axle according to claim 4 and/or claim 5, characterised in that a wearing plate (15) is introduced between the inner cylindrical surface (13) of the air spring bellows support (11) and the outer cylindrical surface (14) of the axle beam (2).

7. An axle according to claim 4 and/or claim 5, characterised in that to connect the locating springs (3) to the axle beam (2) axle seats (7, 8) and spring shackles (9) are provided, the locating springs (3) being clamped by the shackles (9) between the seats (7, 8) and the axle beam (2) being clamped between the shackles (9) and one (7) of the axle seats, and the shackles (9) which engage around the axle beam (2) form lateral guides for the cranked part (12) of the air spring bellows support (11).

8. An axle according to any of claims 1 to 7, characterised in that an axle lift is provided to lift the axle beam (2).

## Revendications

1. Essieu à suspension pneumatique à grande course d'essieu, notamment pour des véhicules pouvant être transportés sur rail, comprenant un corps d'essieu (2) monté par l'intermédiaire de deux ressorts de suspension (3) dans des paliers de suspension (4) d'un châssis de véhicule (6), et comprenant des soufflets pneumatiques (21) qui s'appuient contre le châssis de véhicule (6), et contre le corps d'essieu (2) par l'intermédiaire de supports de soufflets pneumatiques (11) qui sont montés par un palier de pivotement sur le corps d'essieu (2), chaque support de soufflets pneumatiques (11) présentant, de part et d'autre du palier de pivotement, un bras de levier (19, 20) sur lequel s'appuie un soufflet pneumatique (21) disposé dans la direction de la course d'essieu (A),

**caractérisé** en ce que

chaque support de soufflets pneumatiques (11) s'applique, lorsque les soufflets sont alimentés en air comprimé, par au moins un bras de levier (20) contre une butée (24) solidaire du corps d'essieu, qui empêche le bras de levier (20) dirigé vers le palier de suspension (4) de s'éloigner par pivotement du châssis du véhicule, et en ce que les soufflets pneumatiques (21), lorsqu'ils sont alimentés en air comprimé, exercent un couple légèrement plus grand sur le bras de levier précité (20) que sur le bras de levier (19) éloigné du palier de suspension (4).

2. Essieu à suspension pneumatique selon la revendication 1, caractérisé en ce que le bras de levier (20) dirigé vers le palier de suspension (4) est légèrement plus grand que le bras de levier (19) éloigné du palier de suspension (4).

3. Essieu à suspension pneumatique selon la revendication 1 ou 2, caractérisé en ce que les soufflets pneumatiques (21) présentent des butées à tampons en caoutchouc (25) pour limiter la course maximale.

4. Essieu à suspension pneumatique selon l'une des revendications 1 à 3, caractérisé en ce que chaque support de soufflets pneumatiques (11) possède, entre les bras de levier (19, 20), un double coude (12) présentant une surface cylindrique intérieure (13), et en ce que chaque corps d'essieu (2) possède, pour chaque support de soufflets pneumatiques (11), une surface cylindrique extérieure (14) qui constitue le palier de pivotement conjointement avec la surface cylindrique intérieure (13).

5. Essieu à suspension pneumatique selon la revendication 4, caractérisé en ce que le double coude (12) de chaque support de soufflets pneumatiques (11) possède extérieurement une surface de guidage cylindrique (17), et en ce qu'un rouleau (16) est monté sur le corps d'essieu (2) en pouvant rouler sur la surface de guidage (17).

6. Essieu à suspension pneumatique selon la revendication 4 ou 5, caractérisé en ce qu'une tôle d'usure (15) est intercalée entre la surface cylindrique intérieure (13) du support de soufflets pneumatiques (11) et la surface cylindrique extérieure (14) du corps d'essieu (2).

7. Essieu à suspension pneumatique selon l'une des revendications 4 à 6, caractérisé en ce que des pattes d'essieu (7, 8) et des étriers de ressort (9) sont prévus pour assembler les ressorts de suspension (3) et le corps d'essieu (2), les ressorts de suspension (3) étant serrés par les étriers de ressort (9) entre les pattes d'essieu (7, 8) et le corps d'essieu étant serré entre les étriers de ressort (9) et une (7) des pattes d'essieu, et en ce que les étriers de ressort (9) entourant le corps d'essieu (2) constituent des guidages latéraux pour le double coude (12) du support de soufflets pneumatiques (11).

8. Essieu de suspension pneumatique selon l'une des revendications 1 à 7, caractérisé en ce qu'un dispositif de relevage d'essieu est prévu pour relever le corps d'essieu (2).

Fig.1

Fig. 2

Fig.3

EP 0 361 041 B1

Fig. 4